# EUROPEAN PATENT APPLICATION

(11) **EP 2 263 469 A1**
(43) Date of publication of application: **22.12.2010**
(21) Application number: 09007960.9
(22) Date of filing: 18.06.2009
(51) Int. Cl.: A23B 4/28, A22C 9/00

(54) **Hollow needle for a pickling- or curing-device**

(71) Applicant: CFS Bakel B.V., 5761 EN Bakel (NL)
(72) Inventor: The designation of the inventor has not yet been filed
(74) Representative: Wolff, Felix

(57) **Abstract**

The present invention relates to a hollow needle (1) for pickling or curing pieces of meat, having at least one inlet (2) and at least one outlet (3) which are inclined at an angle (α,β) > 0° and < 90°, relative to the longitudinal axis (5) of the needle (1).

## Description

The present invention relates to a hollow needle for pickling or curing pieces of meat, having at least one inlet and at least one outlet.

In many cases, meat is treated with a marinade in order to improve its flavor and or tenderness. It has long been known that this marinade can be injected into the meat via needles which are part of pickling devices. Such needles are for example known from US 4, 388, 859 or FR 2 880 517. The needles according to the state of the art, however, have the disadvantage, that the distribution of the marinade in the meat is unsatisfactory.

It was therefore the objective of the present invention to improve the injection of the marinade into the meat.

This problem is solved with a hollow needle for pickling or curing pieces of meat, having at least one inlet and at least one outlet, whereas the inlet and/or the outlet is at an angle > 0° and < 90°, relative to the longitudinal axis of the needle.

The inventive needle is part of a pickling and/or curing device in which meat is treated with a marinade. A marinade generally refers to a seasoned liquid. The marinating solution can be as simple as salt and/or phosphates and water or more complex with flavours, seasoning, starches, vegetable- and/or dairy protein, aicds, anti-bacterial-, antioxidant- and/or tenderizing-additives.

Under meat according to the present invention is summarized any meat, but also poultry and fish.

The marinade is injected into this meat via the inventive needle. During injection, the marinade is inserted directly into the core of the meat. The marinade liquid for example, is carried in a manifold situated above the needles. In many cases, this manifold travels down, when the needles are driven into the meat. When a needle hits the product, its movement is slowed down and the needle entry orifice is pushed into the manifold allowing the liquid to flow through the needle. When the needle is retracted, the entry orifice exits the manifold stopping the flow of the marinade.

The needle according to the present invention is a hollow needle which in most cases has a round diameter. The needle has an inlet with one or more inlet orifices which are preferably located in one plane and more preferably equidistantly around the circumference of the needle. The needle furthermore has an outlet which comprises one or more outlet orifices which are also preferably located in one plane and more preferably equidistantly around the circumference of the needle. The inlet and the outlet are connected via a channel within the needle. This channel has preferable also a round shape and more preferably, a diameter between 0,8 and 1,7 mm, preferably 1,1 - 1,3 mm.

According to the present invention, the inlet and/or the outlet orifices are arranged in an angle > 0 and < 90 degrees relative to the longitudinal axis of the needle; i.e. they are neither parallel nor perpendicularly arranged relative to the longitudinal axis of the needle. Preferably the angle of the inlet- and/or outlet orifice is between 30° and 60°, more preferable 40° - 50° and most preferable 45°.

In a preferred embodiment of the present invention, the angle of the inlet orifice is identical with the angle of the outlet orifice.

In another preferably embodiment, the angle of the inlet orifice is different from the angle of the outlet orifice.

In a preferred embodiment, the inlet and/or the outlet is at least one borehole, preferably a multitude of boreholes, more preferably two or three boreholes. These boreholes are preferably arranged in one plane and more preferably equidistantly around the circumference of the needle. In a most preferred embodiment the inlet comprises two orifices and the outlet three orifices.

In a preferred embodiment, the area of each inlet orifice is larger than the area of each outlet orifice.

Preferably, the channel area is larger than the area of each inlet and each outlet orifice, respectively.

The inventive hollow needle is part of a pickling and or curing device.

Another embodiment of the present invention is therefore a pickling or curing device comprising the inventive needle.

The inventive device preferably comprises a multitude of the inventive hollow needle. Preferably these needles are spaced equidistantly and/or according to an equidistant pattern.

Preferably the needles are carried below a manifold and are vertically displaceable together with this manifold. In order to inject marinade into the meat, the manifold travels downwards and when the needles hit the meat, the needle entry orifice is pushed into the manifold allowing the liquid to flow. When the needles are retracted, the entry orifice exits the manifold stopping the flow.

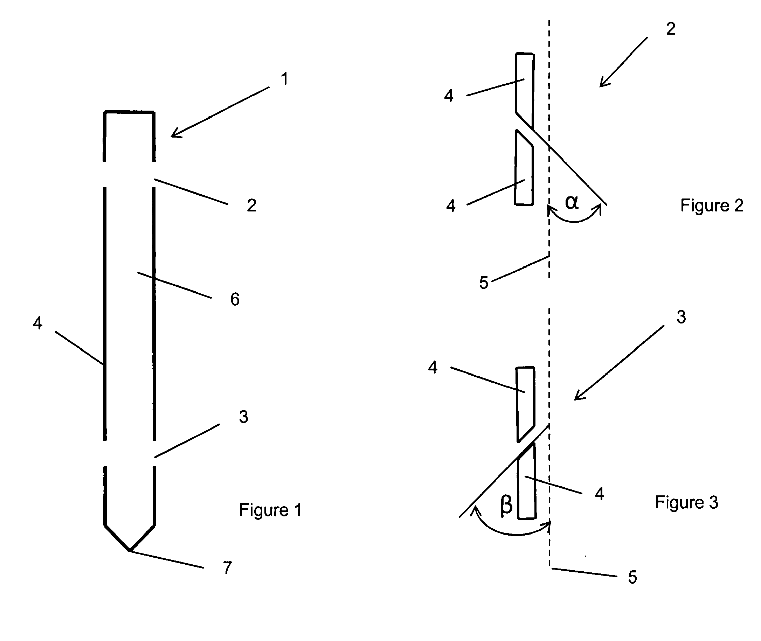

The present invention is now explained according to figures 1 and 3 and example 1. The explanations do not limit the scope of protection of the present invention.
**Figure 1** shows the inventive needle.
**Figure 2** shows the inlet of the inventive needle.
**Figure 3** shows the outlet of the inventive needle.

**Figure 1** shows the inventive needle 1 which comprises at its upper and an inlet 2 and an outlet 3. In the present example, the inlet 2 comprises two orifices which are located in one horizontal plane and opposite to each other. The outlet 3 comprises three orifices which are arranged in one horizontal plane and equidistantly around the circumference of the round needle; i.e. the angle between the outlet orifices is 120°. The diameter of each inlet orifice is 1 mm while the diameter of each outlet orifice is 0.8 mm. The inlet and the outlet is connected by a channel 6 which has a diameter of 1.2 mm.

**Figure 2** shows one inlet orifice of the inventive needle according to figure 1. As can be clearly seen this orifices is inserted, for example drilled, into the sidewall 4 of the needle under an angle α of 45° relative to the center axis 5 of the inventive needle 1.

**Figure 3** shows one outlet orifice of the inventive needle according to figure 1. As can be clearly seen this orifices is inserted, for example drilled, into the sidewall 4 of the needle under an angle β of 45° relative to the center axis 5 of the inventive needle 1.

### Example 1

The invention is now explained according to one example which shows the benefits of the present invention.

**Needle Geometry**

| | **I** | **II** | **III** | **IV** |
|---|---|---|---|---|
| Channel diameter [mm] | 1.2 | 1.2 | 1.2 | 1.2 |
| No. of inlet orifices | 2 | 2 | 2 | 2 |
| Inlet orifice diameter [mm] | 1 | 1 | 1 | 2 |
| No. of outlet orifices | 3 | 3 | 3 | 3 |
| Outlet orifice diameter [mm] | 0.8 | 0.8 | 0.8 | 0.8 |
| Point shape | hollow | hollow | hollow | hollow |
| | point | point | point | point |

**Flow Characteristics**

| Inlet pressure [bar] | | 1,8 | 3,2 |
|---|---|---|---|
| Product | | air | glycerine |
| | density [kg/m³] | 1.2 | 1260 |
| | viscosity [kg/m³] | 0.00002 | 0.8 |

**Mass Flow [gr/s] & Pressure Drop [bar]**

| Needle Inlet Pressure | Mass Flow (gr/s) | Pressure Drop (bar) |
|---|---|---|
| Needle outlet at 45 degrees | | |
| I 1.8 bar | 3.11 | 1.31 |
| II 3.2 bar | 4.27 | 2.26 |
| III 1.8 bar (glyc.) | 3.00 | 1.26 |
| IV 3.2 bar (glyc.) | 4.22 | 2.16 |
| Needle outlet at 90 degrees | | |
| 1.8 bar | 2.65 | 1.55 |
| 3.2 bar | 3.64 | 2.73 |
| 1.8 bar (glyc.) | 2.70 | 1.57 |
| 3.2 bar (glyc.) | 3.70 | 2.76 |

### Results:

### a. Examples I and II

In examples I and II, water was ejected into air.

Changing the inflow and outflow angles from 90 degrees (state of the art) to 45 degrees, has a positive effect on the mass flow and the pressure drop. The mass flow increases in both the low pressure- (1,8 bar: 17,4 %) and high pressure (3,2 bar: 14,75 %) case and the pressure drop decreases in both cases in comparison to a needle with inlets and outlets at a 90 degrees angle: -15, 48 % for the low pressure case and -17,21 % for the high pressure case.

While penetration depth is mainly determined by mass flow, penetration depth is improved because of the increase in mass flow. The fluid flows out at an angle of 45 degrees.

### b. Examples III and IV

In examples III and IV, water was ejected into glycerine, in order to simulate the marinade injection into meat.

An outflow angle of 45 degrees in comparison to 90 degree has also a positive effect on the mass flow and the pressure drop for the cases with injection into glycerine. The mass flow increases with 11 % in the low pressure case and with 14 % in the high pressure case, compared to the needle with inlets and outlets at an angle of 90 degrees. The pressure drop is 20 % less for the low pressure case and 21,7 % for the high pressure case.

### Reference list

- 1: Needle
- 2: Inlet, Inlet orifice
- 3: Outlet, Outlet orifice
- 4: Sidewall
- 5: Center axis of the needle
- 6: Channel
- 7: Point

## Claims

1. Hollow needle (1) for pickling or curing pieces of meat, having at least one inlet (2) and at least one outlet (3), **characterized in, that** the inlet (2) and/or the outlet (3) is at an angle (α, β) > 0° and < 90°°, relative to the longitudinal axis (5) of the needle (1).

2. Hollow needle according to claim 1, **characterized in, that** the angle (α, β) is between 30° and 60°, preferably 40° and 50°, most preferably 45°.

3. Hollow needle according to one of the preceding claims, **characterized in, that** the angle (α) is the same as angle (β).

4. Hollow needle according to claims 1 or 2, **characterized in, that** the angle (α) is different from angle (β)

5. Hollow needle according to one of the preceding claims, **characterized in, that** the inlet (2) and/or the outlet (3) is a borehole.

6. Hollow needle according to one of the preceding claims, **characterized in, that** that it comprises numerous inlets (2) and/or outlets (3).

7. Hollow needle according to one of the preceding claims, **characterized in, that** inlet orifice area is larger than the outlet orifice area.

8. Hollow needle according to claim 7, **characterized in, that** the channel area is larger than the inlet- and/or the outlet orifice area.

9. Device for pickling and/or curing meat comprising one or more needles according to one of the preceding claims.
